# EUROPEAN PATENT APPLICATION

(11) **EP 4 818 652 A1**
(43) Date of publication of application: **07.10.2026**
(21) Application number: 25167690.4
(22) Date of filing: 01.04.2025
(51) Int. Cl.: G01F 23/263

(54) **CAPACITIVE SENSOR UNIT AND METHOD OF DETERMINING A LIQUID LEVEL OF A FLUID MEDIA**

(71) Applicant: Typhon Technologies ApS, 8240 Risskov (DK)
(72) Inventor: Ernst, Martin Mozart, 8240 Risskov (DK); Justesen, Jakob Meldgaard, 8520 Lystrup (DK)
(74) Representative: Larsen & Birkeholm A/S

(57) **Abstract**

The present invention relates to a capacitive sensor unit (1) and a method of determining a liquid level of fluid media, and further an apparatus comprising the capacitive sensor unit (1). The capacitive sensor unit (1) comprises a measuring probe (3) arranged at least partly in a fluid media in a container (2) and a measuring circuit (4) connected to the measuring probe (3). The measuring circuit (4) comprises a signal generating module (6) that supplies energy to the measuring probe (3). A first signal indicative of a capacitance of the measuring probe (3) and a second signal indicative of characteristics of the measuring probe (3) is measured over a predetermined frequency range. The processor (5) is configured to calculate a first liquid level (14) of a first liquid (8) and either at least a second liquid level (12) of a second liquid (7) or a temperature (13) of the fluid media based on the measured first and second signals (10, 11).

## Description

### Technical field

The present invention relates to a capacitive sensor unit comprising a measuring probe and a measuring circuit, where the measuring circuit comprises a processor and a signal generating module. The signal generating module supplies energy to the measuring probe and the output signals of the measuring probe is inputted to the processor. The processor determines at least the characteristics of the transmission line based on the measured signals, which is then used to calculate at least one liquid level of the fluid media.

The present invention further relates to a method of determining a liquid level of a fluid media in a container, where at least one signal is measured using the measuring probe indicating at least the characteristics of the transmission line. At least one liquid level of the fluid media is calculated based on the measure signals.

Also, the present invention relates to an apparatus comprising the above capacitive sensor unit.

### Background of the invention

It is known that the level of liquid within a container, such as tanks, can be measured using capacitive sensors, where a measuring probe is positioned in the liquid and connected to a measuring circuit. The measuring probe forms a transmission line, and the total capacitance of this transmission line is measured when energy is applied to the measuring probe. The measured signal is then processed in a processor of the measuring circuit connected to the probe, wherein the liquid level is determined based on the measured signal. Such capacitive sensors provide a reliable measurement if only one liquid is present in the container.

However, if a mixture of liquids, such immiscible liquids, is present in the container, then the measured signal will drift due to the different relative permittivity of the liquids present in the container. This causes the capacitive sensor unit to indicate a measured liquid level that differs from the actual liquid level. This is particularly relevant for cooling systems using a fluid media, such as ammonia. During operation, another liquid, such as oil, may enter the container and settle at the bottom of the container. These two liquids will accumulate in different layers relative to each other, thereby causing an incorrect measurement of the actual liquid level of the fluid media.

As a result, the operator may introduce more cooling liquid into the cooling system than needed. Traditionally, the contaminating liquid, i.e. the oil, is drained from the container either manually or automatically.

One attempt to solve this problem, is to use a sensor unit that uses a guided wave signal to measure the liquid level of the top layer of liquid, wherein a transmitter emits a pulsed signal towards the liquid surface in the container and a receiver receives the reflected pulsed signal. A time-of-flight calculation is then performed to calculate the distance from the transmitter/receiver and the surface of the liquid. However, this is an expensive solution and is sensitive to the installation setup and the level range of the fluid during operation.

### Object of the invention

One object of the present invention is to overcome the abovementioned problems or at least provide an alternative solution.

One object of the present invention is to provide a system and method that can accurately measure the liquid levels of immiscible liquids.

One object of the present invention is to provide a system and method that can compensate for temperature changes in the liquid.

### Summary of the invention

One object of the present invention is achieved by a capacitive sensor unit, according to claim 1, comprising:
- at least one measuring probe having a first electrode and at least a second electrode arranged relative to each other,
- at least one measuring circuit connected to the measuring probe, the measuring circuit comprising a processor and at least one signal generating module,
- a first measured signal being inputted to the processor, the first signal is indicative of characteristics of the measuring probe, where the processor is configured to calculate a first liquid level of a first liquid of the fluid media based on the measured first signal,
- wherein the processor is further configured to calculate:
   at least a second liquid level of at least a second liquid of the fluid media based on the measured first signal, and/or
   a temperature of the fluid media based on the measured first signal.

This provides a capacitive sensor unit capable of determining the liquid levels of a fluid media comprising two or more liquids having different relative permittivity. This allows for an accurate measurement of the liquid level(s) compared to traditional capacitive sensor units. The present capacitive sensor can be manufactured using standard components and requires a minimum amount of data processing to determine the liquid level, thus reducing the costs and complexity of the capacitive sensor unit.

During operation, the measuring probe is positioned within a container filled, partly or fully, with a fluid media, which flows or is static. The fluid media comprises two or more liquids which will accumulate in individual layers within the fluid media. The order of layers depends on the relative permittivity of the liquids. Such a situation may occur in the cooling industry, where the cooling media may be contaminated with water or oil. However, the present capacitive sensor unit may also be used in other industries.

The measured first signal is indicative of one or more parameters of the transmission line characteristics of the measuring probe. This first signal may be acquired by any known measurements as the characteristics of the measuring probe varies as function of the amount of liquid between the electrodes. The first signal may also be measured as a separate signal which is inputted to the processor. Parameters of the characteristics, e.g. amplitude and phase angle, may be determined using any known measurement techniques.

The liquid level(s) of the liquid(s) in the fluid media may then be calculated based on the parameters of the measured characteristics. Alternatively, the liquid levels may be calculated based on a measured impedance signal as described later. This allows for a simplified calculation, which requires less data processing, as the temperature of the fluid media can set to a constant in the calculations or at least maintained at a preset temperature during operation.

This also provides a capacitive sensor unit capable of determining at least one liquid level and a temperature of a fluid media. The fluid media may comprise a single liquid or two or more liquids having different relative permittivity. This allows for an accurate measurement of the liquid level(s) compared to traditional capacitive sensor units. The present capacitive sensor unit is further able to compensate for temperature changes in the fluid media, thus allowing for a more accurate liquid level measurement.

The relative permittivity of the liquid's changes with the temperature of the fluid media so it is possible to calculate the temperature based on the above measurements of the first signal. The processor is further configured to calculate a temperature of the fluid media based on the measured first signal. The formula for calculating the temperature may simple be implemented into the programming of the processor, where the calculated temperature may be outputted to the operator along with the calculated liquid levels.

Advantageously, the processor can be configured to calculate a first liquid level of a first liquid and at least a second liquid of at least a second liquid of the fluid media based on the measured first signal. Advantageously, the processor can also be configured to calculate at least one liquid level of at least one liquid and a temperature of the fluid media based on the measured first signal. The characteristics measurement may further be combined with a capacitance measurement as described later.

This increases the versatility of the present capacitive sensor unit as it can measure the liquid level of immersible liquids while compensating for the temperature of the liquids. The liquid levels of the different liquids may be calculated as described in detail later.

In one embodiment, at least a second measured signal being inputted to the processor, the second signal is indicative of a capacitance of the measuring probe.

A second signal may be further measured where the second signal is indicative of the capacitance of the measuring probe. This second signal may be acquired by a capacitive measurement as the capacitance of the measuring probe varies as function of the amount of liquid between the electrodes. The second signal may be measured as a separate signal which is inputted to the processor. The capacitance value may be determined using any known capacitive measurement techniques.

In one embodiment, the first and second signals being measured simultaneously from the output of the measuring probe over a predetermined frequency range.

Instead of conducting two separate measurements of the first and second signals, these signals may be measured simultaneously, optionally as part of an impedance signal, on the output of the measuring probe. For example, the voltage or current outputted by the measuring probe may be measured and processed in the processor. This allows for a simpler measurement compared to other measurement techniques.

Advantageously, the signal generating module, e.g. a signal oscillator, may generate an input signal with a predetermined amplitude and a frequency within a lower frequency end and an upper frequency end. For example, the frequency may be selected within a frequency range of 10 kHz to 20 MHz. For example, the amplitude may be selected between 0.5 V to 5 V. This allows the measured signal to be sampled over a series of data points suitable for data processing in the processor.

The measured first and second signals, e.g. the impedance signal, may be sampled by a sample-hold circuit using a predetermined sampling frequency. The sampling frequency may differ from the input frequency of the measured signal. The sampled data points may subsequently be inputted to the processor and used to calculate the liquid levels and/or the temperature. This allows the measured signals to be transformed into digital signals with a suitable resolution for curve fitting, regression analysis, etc. within the processor.

In one embodiment, at least a third measured signal being inputted to the processor, the third signal is indicative of the temperature of the fluid media.

A third signal may be further measured where the third signal is indicative of the temperature of the fluid media. As mentioned above, the temperature may be measured simultaneously, optionally as part of the impedance signal, on the output of the measuring probe. This allows the temperature of the fluid media to be calculated based on the measured first signal.

In one embodiment, the second signal and/or the third signal is/are measured by another sensor or probe, the output of this sensor or probe being inputted to the processor.

As mentioned earlier, a separate measurement, e.g. a capacitive measurement, of the capacitance may be performed by another measuring sensor or probe, which is connected to measuring circuit. The output of this sensor or probe may be inputted to the processor, which may then calculate the capacitance value based on this measured second signal.

Alternatively, a separate measurement of the temperature may be performed by a temperature sensor, which is connected to the measuring circuit. The temperature sensor may measure the temperature contactless or by contact with the fluid media. The output of this temperature sensor may be inputted to the processor, which may then calculate the temperature value based on this measured third signal.

In one embodiment, the first and second electrodes extend in a length direction of the measuring probe, wherein the first and second electrodes are shaped as a cylindrical capacitor, a plate capacitor, or a two-wire capacitor.

The size, shape and configuration of the electrodes of the measuring probe may be adapted to a particular application and/or usage. Further, the distance between the individual electrodes and/or number of electrodes may adapted to the desired application and/or relative permittivity of the liquids.

The measuring probe acts as a transmission line where the characteristics of this transmission line varies as function of the liquid level.

One object of the present invention is further achieved by a method, according to claim 7, of determining a liquid level of a fluid media in a container comprising:
- positioning a measuring probe of a capacitive sensor unit at least partly in the fluid media during operation,
- measuring a first signal using the measuring probe, the first signal being indicative of characteristics of the measuring probe,
- calculating, by the processor of the capacitive sensor unit, a first liquid level of a first liquid of the fluid media based on the measured first signal,
- further calculating, by the processor, at least:
   a second liquid level of at least a second liquid of the fluid media based on the measured first signal, and/or
   a temperature of the fluid media based on the measured first signal.

This provides a method of determining the liquid levels of one, two or more liquids in a fluid media, thus allowing for a more accurate measurement of the liquid level. The present method reduces the amount of data processing needed to calculate the liquid levels compared to other known methods.

The first signal is measured by the measuring probe, which is inputted to the processor. The processor determines one or more parameters of the transmission line characteristics, which in turn is used by the processor to calculate the liquid levels.

The present method also allows the measuring circuit to compensate for the changes in temperature of the fluid media during the liquid level measurements. The temperature may be calculated based on the first or the second signal. Alternatively, the temperature may be measured as contact or non-contact measurement by a separate temperature sensor. The output of the temperature sensor may be inputted to the processor. The measured temperature may be used as a variable to calculate the liquid levels of the fluid media.

In one embodiment, the method further comprises measuring a second signal by the measuring probe, the second signal being indicative of a capacitance value of the measuring probe.

Further, a second signal may be measured by the measuring probe using a capacitive measurement, which may be inputted to the processor. The processor may determine a capacitance value of the measuring probe based on this measured second signal. Alternatively, the capacitance measurement may be measured as a separate signal.

In one embodiment, the first and second signals are measured simultaneously from the output of the measuring probe over a predetermined frequency range.

As mentioned earlier, the first and second signals may be measured simultaneously from the output of the measuring probe. For example, the voltage or current outputted by the measuring probe may be measured and processed in the processor. This allows for a simpler measurement compared to other measurement techniques.

An input signal with a predetermined amplitude and a frequency may be applied to the measuring probe, wherein the frequency is swept from a lower frequency end to an upper frequency end of a frequency range. The output of the measuring probe may then be measured as a series of sample points inputted to the processor. This allows the measured signal to be sampled before data processing in the processor.

In one embodiment, at least the measured first signal is an impedance signal of the measuring probe.

At least the first signal may advantageously be measured as the impedance of the measuring probe. For example, both the first and second signals may be measured as part of the impedance signal, where the capacitance and the characteristics of the measuring probe may be determined based on this impedance signal. This allows for a simpler and less complex configuration of the capacitive sensor unit.

In one preferred embodiment, at least the measured first signal is transformed into a frequency spectrum and at least one resonance frequency of the measured first signal is determined, preferably a first resonant frequency of the first liquid and at least a second resonant frequency of the second liquid are determined, wherein the impedance value is calculated based on this least one resonance frequency.

A frequency spectrum analysis may be performed on the measured signal. The spectrum analysis may be performed within the frequency range mentioned above. The frequency transformed signal may then be analysed to determine at least one resonant frequency. The frequency range may be selected so that two or more resonant frequencies of the measuring probe may be determined within the frequency transformed signal.

A first resonance frequency may occur at about one-quarter wavelength (λ/4) of the measuring probe. A second resonance frequency may occur at about one-half wavelength (λ/2) of the measuring probe. Further resonance frequencies may occur at multiple thereof. These resonance frequencies may be used by the processor to calculate the impedance value. These resonance frequencies may then be used together with the capacitance value to calculate the liquid levels.

In one embodiment, at least the measured first signal is transformed into a frequency spectrum and a curve shape of the frequency transformed signal is estimated, wherein the impedance value is calculated based on this curve shape.

The impedance value of the frequency transformed signal may also be determined by applying a curve fitting algorithm to this signal. For example, regression analysis may be used to estimate the optimal curve shape fitting the profile of the measured signal. The regression analysis may be a least mean squares algorithm. However, other curve fitting techniques may be used to estimate the impedance value of the measured signal.

In one embodiment, the method further comprises measuring a third signal by another sensor, the third signal is indicative of the temperature of the fluid media. As mentioned earlier, the temperature of the fluid media may be measured directly using a temperature sensor connected to the measuring circuit. The output of this temperature sensor may then inputted to the processor and used to calculate the capacitance value and/or the liquid levels.

One object of the present invention is further also achieved by an apparatus, according to claim 14, comprising a cooling circuit with a container in which a fluid media is stored or passing through, wherein a capacitive sensor unit, as described earlier, is arranged relative to the container for measuring at least one liquid level of the fluid media in the container.

The present capacitive sensor unit can be installed in an apparatus with a container, e.g. a storage tank or a pipe, in which a fluid media is present. The capacitive sensor unit may be configured as a compact, stand-alone unit where the measuring probe is integrated with the measuring circuit. Alternatively, the measuring probe and measuring circuit may be interconnected via wires so that measuring circuit may be positioned at a distance from the measuring probe.

The capacitive sensor unit is suited for usage in a cooling system where the fluid media comprising a cooling liquid, such as ammonia. In such cooling circuits, another liquid, such as oil or water, may enter the container and contaminate the fluid media. However, the present capacitive sensor is capable of accurately measure the liquid levels of both liquids in the fluid media, thus providing a more accurate measurement of the liquid level, preferably of the cooling liquid.

### Brief description of the figures

Figure 1 shows an exemplary configuration of an apparatus comprising a capacitive sensor unit according to the invention,
Figure 2 shows a first embodiment of the capacitive sensor unit,
Figure 3 shows an exemplary embodiment of the measuring probe,
Figure 4 shows the measuring probe partly positioned in a fluid media comprising at least two liquids,
Figure 5 shows an exemplary graph of a frequency spectrum of an impedance measurement with at least two resonance frequencies,
Figures 6a-b show the measuring probe positioned in a fluid media, where the liquids have accumulated in two different orders of layers,
Figure 7 shows an exemplary graph of a frequency spectrum of an impedance measurement with one resonance frequency,
Figure 8 shows a second embodiment of the capacitive sensor unit, and
Figure 9 shows a third embodiment of the capacitive sensor unit.

The present invention will now be described in more detail in the following.

### Detailed description of the invention

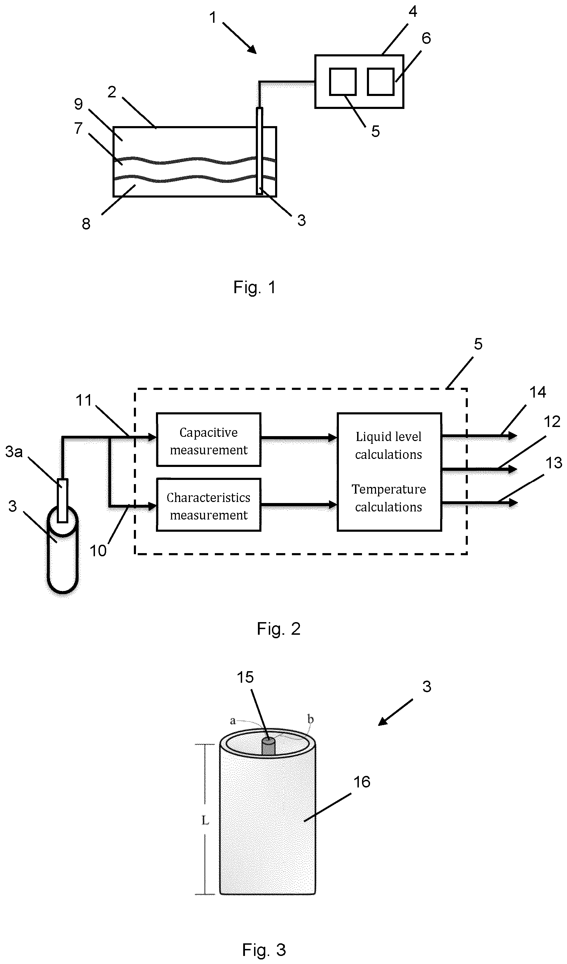

Figure 1 shows an exemplary configuration of an apparatus comprising a capacitive sensor unit according to the invention. The capacitive sensor unit 1 is arranged relative to a container 2, e.g. a tank, in which a fluid media is present. The capacitive sensor unit 1 comprises a measuring probe 3 which is positioned, at least partly, in the fluid media and is connected to a measuring circuit 4.

Here, the fluid media comprises a first liquid 7, e.g. a cooling liquid, such as ammonia, and a second liquid 8, e.g. oil or water. A gas 9, e.g. air, may be present above the surface level of the fluid media in the container 2.

The measuring circuit 4 comprises a signal generating module 6 which is configured to generate an input signal to the measuring probe 3. The input signal is generated at a frequency which is varied from a lower frequency end to an upper frequency end of a predetermined frequency range.

The measuring circuit 4 further comprises a processor 5 connected to the measuring probe 3. The output of the measuring probe 3 is measured over the frequency range and sampled into a series of samples for subsequent processing in the processor 5.

Figure 2 shows a first embodiment of the capacitive sensor unit 1, where the output 3a of the measuring probe 3 is connected to the processor 5. The output may be measured as a common signal comprising both the first and second signals 10, 11. Alternatively, the first and second signals 10, 11 are measured as separate signals inputted to the processor 5.

A capacitive measurement is performed of the first signal 11, which is then used by the processor 5 to determine a capacitance value of the measuring probe 3. Further, a measurement of the second signal 10 is performed, which is then used to determine the characteristics of the measuring probe 3. The capacitance value and the characteristic values are then used as variables to calculate a first liquid level 14 of the first liquid 7 and further a second liquid level 12 of the second liquid 8.

Here, the temperature of the fluid media is also used as a variable in the equations to calculate the liquid levels of the fluid media. The processor is thus able to determine a temperature 13 of the fluid media based on the measured first and second signals 10, 11.

Figure 3 shows an exemplary embodiment of the measuring probe 3. The measuring probe 3 comprises a first electrode 15 and at least a second electrode 16 arranged relative to the first electrode 15 to form a gap between the two electrodes. The fluid media is able to flow between and around the electrodes of the measuring probe 3 during operation.

Here, the first and second electrodes 15, 16 are shaped to form a cylindrical capacitor with a total probe length, L. The first electrode 15 is shaped as a rod extending in a length direction of the measuring probe 3. However, the first electrode 15 may also be shaped as an inner tube (not shown). The second electrode 16 is shaped as an outer tube surrounding the first electrode 15. The first and second electrodes 15, 16 are connected to the input and output of the measuring probe 3, respectively.

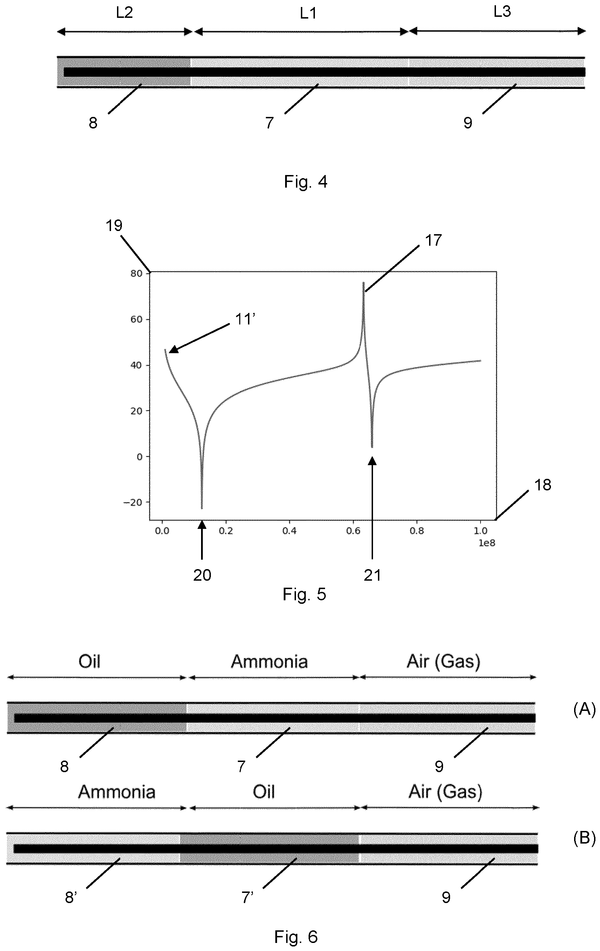

Figure 4 shows the measuring probe 3 partly positioned in a fluid media comprising at least two liquids. The capacitance value is equal to the total capacitance Cₜₒₜₐₗ, which is calculated using a first equation: ${C}_{total} = {C}_{liquid 1} \left(L1,T\right) + {C}_{liquid 2} \left(L2,T\right) + {C}_{gas} \left(L3,T\right)$ (equation 1), where C_{liquid1} is the local capacitance of the first liquid 7, L1 is the local probe length of the first liquid 7 and T is the temperature of the fluid media. Further, C_{liquid2} is the local capacitance of the second liquid 8, L2 is the local probe length of the second liquid 8 and T is the temperature of the fluid media. Further, C_{gas} is the local capacitance of the gas located above the fluid media, L3 is the local probe length of the gas 9 and T is the temperature of the fluid media.

The resonant frequencies 20, 21 of the measured impedance are used to determine the first liquid level 14 of the first liquid 7 and the second liquid level 12 of the second liquid 8, which are calculated using a second equation and a third equation: ${f}_{resonance _ 1} = f {1}_{transmission line} \left(L1,L2,L3,T\right)$ (equation 2), ${f}_{resonance _ 2} = f {2}_{transmission line} \left(L1,L2,L3,T\right)$ (equation 3), **where** f_{resonance_1} is the first resonant frequency 20 of the impedance signal, f1_{transmission line} is the one-quarter wavelength frequency, L1 is the local probe length of the first liquid 7, L2 is the local probe length of the second liquid 8 and T is the temperature of the fluid media. Further, f_{resonance_2} is the second resonant frequency 21 of the impedance signal, f2_{transmission line} is the one-half wavelength frequency, L1 is the local probe length of the first liquid 7, L2 is the local probe length of the second liquid 8 and T is the temperature of the fluid media.

To determine the three unknown variables L1, L2 and T, a number of curve points is established for the measured signal over a predetermined frequency range. The processor uses any known curve fitting algorithm to establish an estimate for the three unknown variables.

The mathematical problem of having three equations and three unknown variables may be solved in many ways. For example, a regression analysis such the "Least Mean Squares" algorithm can be used, which seeks to minimize the residual between the sampled data points and a function that describes the profile of the sampled data points.

The skilled person is thus able to solve three equations to find the three unknown variables using known mathematical principles.

Figure 5 shows an exemplary graph of a frequency spectrum of an impedance measurement 17 with at least two resonance frequencies 20, 21. Here, the Y-axis indicates the absolute value 19 of the impedance measurement, while the X-axis indicates the frequency 18 of the impedance measurement.

As illustrated, the impedance measurement is performed over a frequency range sufficiently wide so that at least resonant frequencies of the transmission line are captured in the measured signal. A first resonant frequency 20 occurs about the one-quarter wavelength of the measuring probe 3. Further, a second resonant frequency 21 occurs about the one-half wavelength of the measuring probe 3. These two resonant frequencies 20, 21 are used to calculate the liquid levels 12, 14 of the first and second liquids 7, 8 as mentioned above.

Optionally, the capacitance value 17' of the measuring probe 3 can be determined from the impedance measurement. The capacitance value 17' can be determined at frequencies below the first resonant frequency 20 where the impedance has a relative constant value.

Figures 6a-b show the measuring probe 3 positioned in a fluid media, where the liquids have accumulated in two different orders of layers. The order in which the liquids 7, 8 accumulate will affect the measurement of at least the second signal 10.

Here, figure 6a illustrates that the heavier liquid (oil), i.e. the second liquid 8, has accumulated at the bottom of the container 2, whilst the lighter liquid (ammonia), i.e. the first liquid 7, has accumulated at the top of the fluid media.

Simulations of a fluid media having a layer of ammonia of 0.5m, a layer of oil of 0.5m and a layer of 0.2m are used to demonstrate the effects of the present method. Using the abovementioned three equations and three unknown variables, the capacitance of the measuring probe is calculated to 836pF, the first resonant frequency is calculated to 11.03 MHz and the second resonant frequency is calculated to 55.43 MHz. For this simulation, the temperature of the fluid media is calculated to 0°C.

Further simulations have demonstrated that if the temperature increases, then the first and second resonant frequencies will increase while the capacitance with decrease.

Here, figure 6b illustrates the two liquids (oil and ammonia) of figure 6a arranged in an opposite order. In order to compare the results of the two simulations, the lengths of the respective layers are kept the same for both simulations.

Using the abovementioned three equations and three unknown variables, the capacitance of the measuring probe is calculated to 836pF, the first resonant frequency is calculated to 10.02 MHz and the second resonant frequency is calculated to 57.13 MHz. For this simulation, the temperature of the fluid media is calculated to 0°C.

The results of these simulations of the layers illustrated in figures 6a and 6b have shown that the resonant frequencies depend on the order of the layers. The results have further shown that the capacitance remains the same regardless of the order of layers.

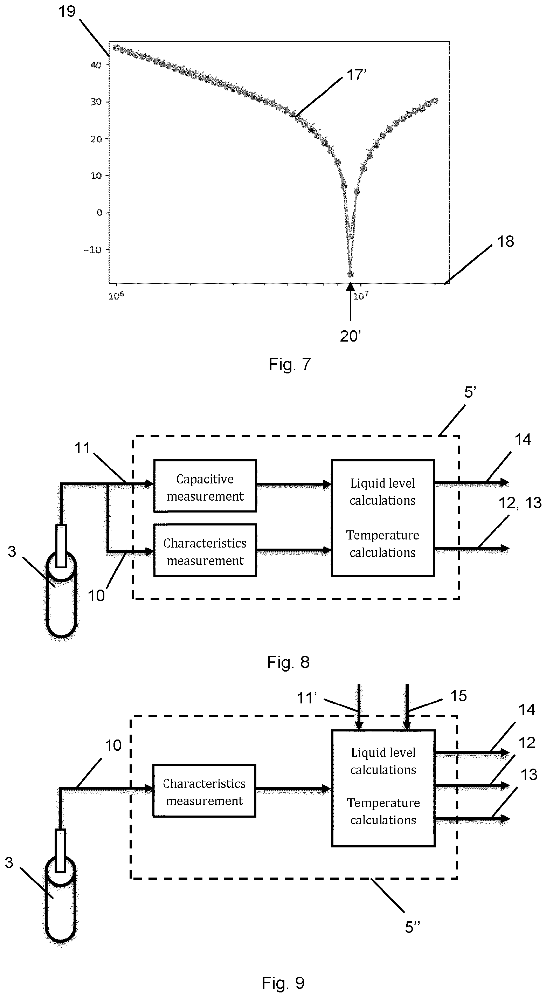

Figure 7 shows an exemplary graph of a frequency spectrum of an impedance measurement 17' with one resonance frequency. In this alternative configuration, the capacitance value is equal to the total capacitance Cₜₒₜₐₗ, which is calculated using the first equation: ${C}_{total} = {C}_{liquid 1} \left(L1,T\right) + {C}_{liquid 2} \left(L2,T\right) + {C}_{gas} \left(L3,T\right)$ (equation 1), where C_{liquid1} is the local capacitance of the first liquid 7, L1 is the local probe length of the first liquid 7 and T is the temperature of the fluid media. Further, C_{liquid2} is the local capacitance of the second liquid 8, L2 is the local probe length of the second liquid 8 and T is the temperature of the fluid media. Further, C_{gas} is the local capacitance of the gas located above the fluid media, L3 is the local probe length of the gas 9 and T is the temperature of the fluid media.

The resonant frequency 20 of the measured impedance is used to determine the first liquid level 14 of the first liquid 7 and either the second liquid level 12 of the second liquid 8 or the temperature 13 of the fluid media, which is calculated using the second equation: ${f}_{resonance _ 1} = f {1}_{transmission line} \left(L1,L2,L3,T\right)$ (equation 2), where f_{resonance_1} is the resonant frequency 20 of the impedance signal, f1_{transmission line} is the one-quarter wavelength frequency, L1 is the local probe length of the first liquid 7, L2 is the local probe length of the second liquid 8 and T is the temperature of the fluid media.

To determine the two unknown variables L1 and T, a number of curve points is established for the measured signal over a predetermined frequency range. The processor uses any known curve fitting algorithm to establish an estimate for the three unknown variables.

The mathematical problem of having two equations and two unknown variables may be solved in many ways. For example, a regression analysis such the "Least Mean Squares" algorithm can be used, which seeks to minimize the residual between the sampled data points and a function that describes the profile of the sampled data points.

The skilled person is thus able to solve two equations to find the two unknown variables using known mathematical principles.

Figure 8 shows a second embodiment of the capacitive sensor unit 1. Here, the configuration of the measuring probe 3 and the measuring circuit 4 is substantially the same as illustrated in figure 2.

Here, the processor 5' is configured to output only two parameters, i.e. the first liquid level 14 and either the second liquid level 12 or the temperature 14. Whereas in figure 2, the processor 5 is configured to output three parameters, i.e. the first liquid level 14, the second liquid level 12 and the temperature 14.

By outputting only two parameters, the data processing in the processor 5' can be reduced even further compared to the data processing required for outputting three parameters.

The capacitive sensor unit 1 of the present invention is particularly suitable for measuring a liquid level in a refrigeration system or other similarly closed system containing a mixture of liquids.

Figure 9 shows a third embodiment of the capacitive sensor unit 1. Here, the configuration of the measuring probe 3 and the measuring circuit 4 is substantially the same as illustrated in figure 2.

Here, the processor 5" is configured to output at least two parameters, i.e. the first liquid level 14 and either the second liquid level 12 or the temperature 14. Advantageously, the processor 5" is configured to output three parameters, i.e. the first liquid level 14, the second liquid level 12 and the temperature 14.

A separate capacitive measurement 11' by another measuring probe is inputted to the processor 5", which then calculates the capacitance value of that measuring probe. Alternatively or additionally, a separate temperature measurement 15 by another sensor is inputted to the processor 5", which then calculates the temperature of the fluid media.

The capacitive sensor unit 1 of the present invention is particularly suitable for measuring a liquid level in a refrigeration system or other similarly closed system containing a mixture of liquids.

## Claims

1. A capacitive sensor unit (1) comprising:
- at least one measuring probe (3) having a first electrode (15) and at least a second electrode (16) arranged relative to each other,
- at least one measuring circuit (4) connected to the measuring probe (3), the measuring circuit (4) comprising a processor (5) and at least one signal generating module (6),
- a first measured signal (10) being inputted to the processor (5), the first signal is indicative of characteristics of the measuring probe (3), where the processor (5) is configured to calculate a first liquid level (14) of a first liquid (7) of the fluid media based on the measured first signal (10),
- wherein the processor (5) is further configured to calculate:
at least a second liquid level (12) of at least a second liquid (8) of the fluid media based on the measured first signal (10), and/or
a temperature (13) of the fluid media based on the measured first signal (10).

2. The capacitive sensor unit (1) according to claim 1, **characterised in that** at least a second measured signal (11) being inputted to the processor (5), the second signal is indicative of a capacitance of the measuring probe (3).

3. The capacitive sensor unit (1) according to claim 1 or 2, **characterised in that** the first and second signals being measured simultaneously from the output (3a) of the measuring probe (3) over a predetermined frequency range.

4. The capacitive sensor unit (1) according to any one of claims 1 to 3, **characterised in that** at least a third measured signal (15) being inputted to the processor (5), the third signal is indicative of the temperature (13) of the fluid media.

5. The capacitive sensor unit (1) according to claim 2 or 4, **characterised in that** the second signal (11') and/or the third signal (15) is/are measured by another sensor or probe, the output of this sensor or probe being inputted to the processor (5).

6. The capacitive sensor unit (1) according to any one of claims 1 to 5, **characterised in that** the first and second electrodes (15, 16) extend in a length direction of the measuring probe (3), wherein the first and second electrodes (15, 16) are shaped as a cylindrical capacitor, a plate capacitor, or a two-wire capacitor.

7. A method of determining a liquid level of a fluid media in a container (2) comprising:
- positioning a measuring probe (3) of a capacitive sensor unit (1) at least partly in the fluid media during operation,
- measuring a first signal (10) by the measuring probe (3), the first signal being indicative of characteristics of the measuring probe (),
- calculating, by a processor (5) of the capacitive sensor unit (1), a first liquid level (14) of a first liquid (7) of the fluid media based on the measured first signal (11),
- further calculating, by the processor (5), at least:
a second liquid level (12) of at least a second liquid (8) of the fluid media based on the measured first signal (11) and/or
a temperature (13) of the fluid media based on the measured first signal (10).

8. The method according to claim 5, **characterised in that** the method further comprises measuring a second signal (10) by the measuring probe (3), the second signal being indicative of a capacitance value of the measuring probe (3).

9. The method according to claim 8, **characterised in that** the first and second signals are measured simultaneously from the output (3a) of the measuring probe (3) over a predetermined frequency range.

10. The method according to any one of claims 7 to 9, **characterised in that** the measured first signal (10) is an impedance of the measuring probe (3).

11. The method according to claim 10, **characterised in that** at least the measured second signal (10) is transformed into a frequency spectrum and at least one resonance frequency of the measured second signal (10) is determined, preferably a first resonant frequency (20) of the first liquid (8) and at least a second resonant frequency (21) of the second liquid (7) are determined, wherein the impedance value is calculated based on this least one resonance frequency.

12. The method according to claim 10, **characterised in that** at least the measured second signal (10) is transformed into a frequency spectrum and a curve shape of the frequency transformed signal is estimated, wherein the impedance value is calculated based on this curve shape.

13. The method according to any one of claims 7 to 12, **characterised in that** the method further comprises measuring a third signal (15) by another sensor, the third signal is indicative of the temperature (13) of the fluid media.

14. An apparatus comprising a cooling circuit with a container (2) in which a fluid media is stored or passing through, wherein a capacitive sensor unit (1) according to any one of claims 1 to 6 is arranged relative to the container (2) for measuring at least one liquid level of the fluid media in the container (2).
